# EUROPÄISCHE PATENTSCHRIFT

(11) **EP 1 176 383 B1**
(45) Veröffentlichungstag und Bekanntmachung des Hinweises auf die Patenterteilung: **21.01.2004**
(21) Anmeldenummer: 00113621.7
(22) Anmeldetag: 28.06.2000
(51) Int. Cl.: F28F 25/12, F28C 1/14

(54) **Kühlturm**
Cooling tower
Tour de refroidissement

(43) Veröffentlichungstag der Anmeldung: 30.01.2002
(73) Patentinhaber: Balcke-Dürr GmbH, 46049 Oberhausen (DE)
(72) Erfinder: Menzel, Knut, Dipl.-Ing., 45289 Essen (DE); Kaatz, Michael, 40878 Ratingen (DE)
(74) Vertreter: Lang, Friedrich, Dipl.-Ing.

(56) Entgegenhaltungen:
- DE-A- 19 611 627
- US-A- 4 893 669

## Beschreibung

Die Erfindung betrifft einen Kühlturm mit einer von der Kühlluft von unten nach oben durchströmten Kühlkammer, einer Wassereindüsung aus horizontal in der Kühlkammer verteilten Sprühdüsen sowie einem ersten Lufteintritt unterhalb und einem zweiten, von der Seite her in die Kühlkammer führenden Lufteintritt oberhalb der Wassereindüsung.

Ein solcher Kühlturm ist in einer Bauart als Naß-Trocken-Kühlturm aus der DE 29 25 462 C3 bekannt. In die durch die Kühlturmschale gebildete Kühlkammer sind von der Seite her zylindrische Rohre geführt, über welche der Kühlkammer oberhalb der Rieseleinbauten ein weiterer Luftstrom zugeführt wird. Die aus diesen Rohren austretenden Strahlen sind gebündelt und führen so zu einer wirkungsmäßigen Verlängerung der als Strömungskörper dienenden Rohre. Dabei beträgt die radiale Erstreckung der Rohre selbst 20 bis 40% des Radius des Kühlturms. Der in der DE 29 25 462 C3 beschriebene Naß-Trocken-Kühlturm ist rotationssymmetrisch gestaltet und die zylindrischen Rohre sind gleichmäßig über den kreisförmigen Umfang des Kühlturms verteilt. Hierdurch ergibt sich eine gleichmäßige Durchmischung über dem gesamten Strömungsquerschnitt des Kühlturms. Bei einer anderen Bauform des Kühlturms und insbesondere einer von der Kreisform abweichenden Gestaltung wäre hingegen mit einer zumindest in Teilbereichen der Kühlkammer weit weniger wirkungsvollen Mischung bei zudem längerer Mischungsstrecke und damit vergrößerter Bauhöhe des Kühlturms zu rechnen.

Der Erfindung liegt die **Aufgabe** zugrunde, einen Kühlturm mit seitlicher Zumischung von Kühlluft zu schaffen, der sich bei guter Mischung der Medien über die gesamte Querschnittsfläche durch eine geringe Bauhöhe auszeichnet.

Zur **Lösung** wird bei einem Kühlturm mit den eingangs genannten Merkmalen vorgeschlagen, daß der zweite Lufteintritt über ein zwei- oder mehrstufig in das Innere der Kühlkammer hineinragendes Rohr erfolgt, dessen Stufen, beginnend mit der von der Kühlkammerwand ausgehenden ersten Stufe, jeweils verringerte Strömungsquerschnitte aufweisen, wobei aus den einzelnen Stufen jeweils nur Teilmengen des dem Rohr insgesamt zugeführten Kühlluftmenge austreten. Vorzugsweise ist hierbei der freie Ausströmungsquerschnitt am Ende jeder Stufe des Rohres gleich dem Strömungsquerschnitt dieser Stufe, vermindert um den Strömungsquerschnitt der nächsten Stufe.

Infolge der mehrstufigen Gestaltung des weit in das Innere der Kühlkammer hineinragenden Rohres wird eine Verteilung der über dieses Rohr zugeführten Kühlluft über die Querschnittsfläche der Kühlkammer erreicht. Aus den einzelnen Stufen treten jeweils nur Teilmengen der dem jeweiligen Rohr insgesamt zugeführten Kühlluftmenge aus, wodurch bereits mit der Einspeisung der Kühlluft eine Verteilung erzielt wird und damit insgesamt eine bessere Durchmischung über den Gesamtquerschnitt der Kühlkammer oberhalb der Wassereindüsung. Infolge der erzielten Vergleichmäßigung bereits in den Bereichen der Kühlluftaustritte und der damit einhergehenden verbesserten Durchmischung bei verkürzter Mischstrecke läßt sich der erfindungsgemäße Kühlturm mit geringerer Bauhöhe realisieren, was zum einen zu geringeren Baukosten führt und zum anderen in gestalterischer und städteplanerischer Hinsicht Vorteile bietet.

Wenn der in den Hauptluftstrom, welcher durch die über den ersten Lufteintritt zugeführte Kühlluft gebildet wird, einzubringende zusätzliche Luftstrom nicht durch natürlichen Zug erzeugt werden kann, ist es gemäß einem weiteren Merkmal der Erfindung möglich, einen vor dem Rohr angeordneten, Luft in das Rohr fördernden Druckventilator einzusetzen. Vorzugsweise ist der Druckventilator von einem zylindrischen Ventilatorgehäuse umgeben, und ein erster Teilstrom des das Ventilatorgehäuse verlassenden Kühlluftstroms gelangt in die erste Stufe des Rohres, und ein zweiter Teilstrom unmittelbar in die Kühlkammer. Auf diese Weise gelangt ein Teilstrom der zusätzlich zugeführten Luft auch unmittelbar in den Bereich der Wandung des Kühlturminneren und führt dort zu einer Vermischung mit der durch die Wassereindüsung hindurchtretenden Hauptluftströmung.

Eine weitere Ausgestaltung des Kühlturms ist gekennzeichnet durch einen Luftwärmetauscher vor dem zweiten Lufteintritt. Der Luftwärmetauscher ist mit Wärmeaustauschflächen für den indirekten Wärmeaustausch versehen.

Gemäß einer weiteren Ausgestaltung wird vorgeschlagen, daß die Stufen des Rohres axial relativ zueinander verstellbar sind. Hierdurch wird es möglich, die zwischen den einzelnen Stufen des Rohres austretende Sekundärluft gezielt in Querschnittsbereiche des Kühlturms zu leiten, um dort die Zumischung zu beeinflussen.

In der Zeichnung sind Ausführungsbeispiele der erfindungsgemäßen Vorrichtung dargestellt, und zwar zeigen
- Fig. 1: einen senkrechten Schnitt durch einen in zwei Ebenen mit Kühlluft gespeisten Naß-Trocken-Kühlturm mit einem mehrstufig gestalteten Rohr für die Verteilung der Sekundärluft;
- Fig. 2: das mehrstufig gestaltete Rohr für die Verteilung der Sekundärkühlluft in einer zweiten Ausgestaltung;
- Fig. 3: das mehrstufig gestaltete Rohr für die Verteilung der Sekundärkühlluft gemäß einer weiteren Ausgestaltung;
- Fig. 4: eine Ansicht gemäß der in den Figuren 2 und 3 eingetragenen Ansichtsebene A;
- Fig. 5: eine der Fig. 4 entsprechende Ansicht bei rechteckiger Querschnittgestaltung des mehrstufigen Rohres und
- Fig. 6: eine der Fig. 4 entsprechende Ansicht bei einer dreieckigen Querschnittgestaltung des mehrstufigen Rohres.

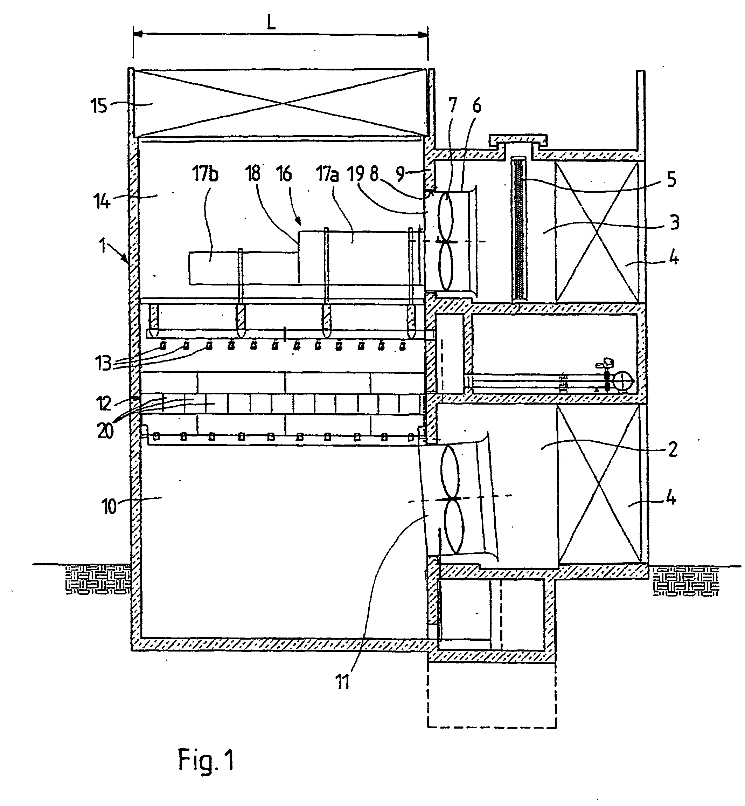

Fig. 1 zeigt in einer Querschnittsdarstellung einen Naß-Trocken-Kühlturm mit einer im wesentlichen vertikal durchströmten, in der Grundfläche rechteckigen Kühlkammer 1 sowie seitlich angeordneten Kammern 2 und 3 für die Zuführung von Kühlluft in die Kühlkammer 1. Am Eintritt in die Kammern 2, 3 sind geräuschdämpfende Lamellen 4 eingebaut. In der oberen Kammer 3 durchströmt die einströmende Luft nach den Lamellen 4 einen Luftwärmetauscher 5 mit Wärmeaustauschflächen für den indirekten Wärmeaustausch. Am Ende jeder Kammer 2, 3 unmittelbar vor dem Eintritt in die Kühlkammer 1 ist in einem Ventilatorgehäuse 6 ein elektrisch angetriebener Druckventilator 7 gelagert. Das Ventilatorgehäuse 6 ist hierbei bündig in eine entsprechende Öffnung 8 in der vertikalen Wand 9 der Kühlkammer 1 eingesetzt, wodurch der von den Druckventilatoren 7 erzeugte Luftstrom vollständig und in horizontaler Richtung in das Innere der Kühlkammer 1 gelangt.

Die Kühlkammer 1 ist aus insgesamt vier Zonen aufgebaut, die übereinander angeordnet sind. Die unterste Zone ist ein Verteilerraum 10 für den über den ersten Lufteintritt 11 zuströmenden Hauptluftstrom.

Die nächste Zone darüber wird durch eine Wassereindüsung 12 mit horizontal in der Kühlkammer 1 verteilten Sprühdüsen 13 gebildet. Von den Sprühdüsen 13 wird ein feiner Wasserregen erzeugt, der sich gleichmäßig in der Ebene der Wassereindüsung 12 über den Kühleinbau 20 verteilt.

Die nächste Zone oberhalb ist eine Mischkammer 14, welche sich auf der selben Höhe wie die Kammer 3 befindet. In die Mischkammer 14 mündet der zweite Lufteintritt 19.

Die oberste Zone des Kühlturms schließlich ist mit Kulissen 15 ausgerüstet, die einen gleichmäßigen Austritt der feuchten Luft in die Atmosphäre gewährleisten und zudem die Geräuschemission vermindern.

Erfindungsgemäß wird die über den oberen Druckventilator 7 in die Mischkammer 14 geförderte Luft in mehrere Teilströme aufgeteilt, die sich sodann mit dem aus dem Verteilerraum 10 aufsteigenden Hauptluftstrom mischen. Hierzu ist in Verlängerung des oberen Druckventilators 7 ein mehrstufig gestaltetes Rohr 16 in der Kühlkammer angeordnet. Beim Ausführungsbeispiel nach Fig. 1 ist dieses Rohr 16 zweistufig gestaltet und besteht aus einer ersten Stufe 17a größeren Durchmessers und einer sich daran anschließenden zweiten Stufe 17b geringeren Durchmessers. Der Durchmesser der ersten Stufe 17a ist wiederum geringer als der Durchmesser des Ventilatorgehäuses 6 für den Druckventilator 7. Die Stufen des Rohres weisen daher, beginnend mit der von der Wand 9 ausgehenden ersten Stufe 17a, jeweils verringerte Strömungsquerschnitte auf. Der freie Ausströmungsquerschnitt 18 am Ende der ersten Stufe 17a des Rohres 16 ergibt sich aus dem Strömungsquerschnitt dieser Stufe 17a, vermindert um den Strömungsquerschnitt der nächsten Stufe 17b. Ferner gelangt ein Teilstrom der Kühlluft unmittelbar aus dem Ventilatorgehäuse 6 in die Kühlkammer, da der Durchmesser des Ventilatorgehäuses 6 wiederum größer ist als der Durchmesser der ersten Stufe 17a.

Es werden daher bei dem Ausführungsbeispiel nach Fig. 1 insgesamt drei Sekundärluft-Teilströme abgegeben. Der erste Teilstrom gelangt unmittelbar aus dem Ventilatorgehäuse 6 in das Innere der Kühlkammer, der zweite Teilstrom am Ende der ersten Stufe 17a und der dritte Teilstrom am Ende der zweiten Stufe 17b. Durch eine entsprechende Länge dieser Stufen läßt sich erreichen, daß Teilluftmengen möglichst gleichmäßig über der horizontalen Gesamtlänge L der Mischkammer 14 abgegeben werden.

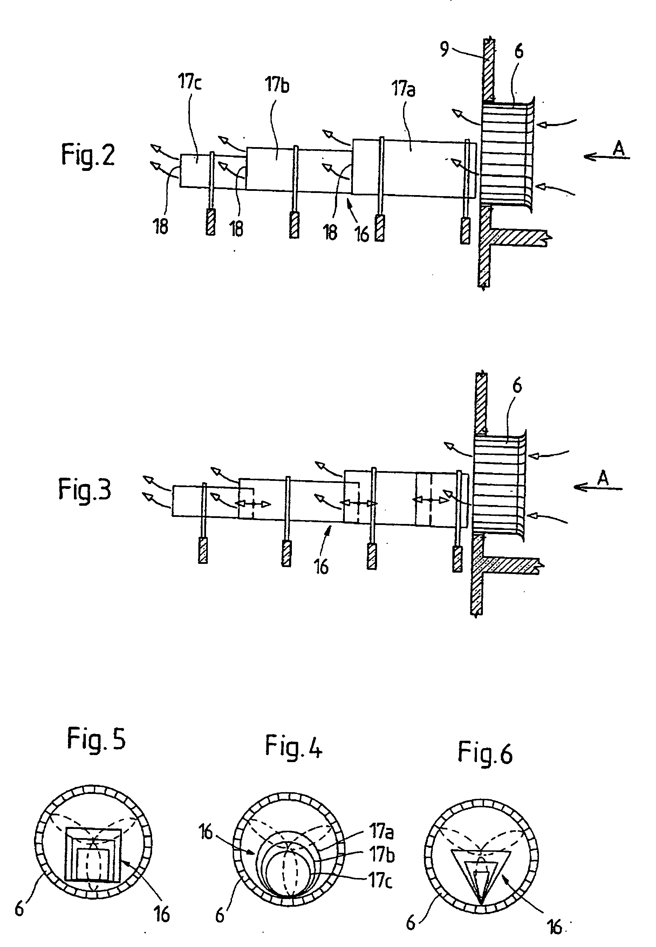

Beim Ausführungsbeispiel nach Fig. 1 sind die einzelnen Rohrstufen kreiszylindrisch gestaltet. Dies entspricht in der Ansicht der Fig. 4. Jedoch ist es auch möglich, gemäß Fig. 5 die einzelnen Rohrstufen quadratisch oder rechteckig zu gestalten, oder gemäß Fig. 6 mit dreieckiger Querschnittsfläche. Bei der Auslegung der Querschnittsflächen der einzelnen Stufen besteht eine weitgehende Freiheit, wobei die jeweils am Übergang von einer in die andere Stufe abgegebene Teilluftmenge abhängig von der Querschnittsdifferenz ist. Je größer die Querschnittsdifferenz, desto größer die an diesem Übergang abgegebene Teilluftmenge.

Bei dem Ausführungsbeispiel nach Fig. 2 besteht das Rohr 16 aus insgesamt drei Stufen 17a, 17b, 17c, so daß sich in Verbindung mit dem eine erste Stufe bildenden Ventilatorgehäuse 6 insgesamt vier Ausströmungsquerschnitte und damit vier Teilmengen für die Sekundärluft ergeben.

In Fig. 3 schließlich ist dargestellt, daß die einzelnen Stufen 17a, 17b, 17c axial relativ zueinander verstellbar sein können. Die Verstellung ist mittels geeigneter elektrischer oder hydraulischer Antriebe auch während des Betriebes des Kühlturms möglich, um so Teilmengen der Sekundärluft in bestimmte Bereiche des durchströmten Querschnittes der Kühlkammer hineinzufördem.

### Bezugszeichenliste

- 1: Kühlkammer
- 2: Kammer
- 3: Kammer
- 4: Lamelle
- 5: Luftwärmetauscher
- 6: Ventilatorgehäuse
- 7: Druckventilator
- 8: Öffnung
- 9: Wand der Kühlkammer
- 10: Verteilerraum
- 11: erster Lufteintritt
- 12: Wassereindüsung
- 13: Sprühdüse
- 14: Mischkammer
- 15: Kulisse
- 16: Rohr
- 17a: erste Stufe
- 17b: zweite Stufe
- 17c: dritte Stufe
- 18: Ausströmungsquerschnitt
- 19: zweiter Lufteintritt
- 20: Kühleinbau
- L: Gesamtlänge der Mischkammer

## Patentansprüche

1. Kühlturm mit einer von der Kühlluft von unten nach oben durchströmten Kühlkammer (1), einer Wassereindüsung (12) aus horizontal in der Kühlkammer verteilten Sprühdüsen (13) sowie einem ersten Lufteintritt (11) unterhalb und einem zweiten, von der Seite her in die Kühlkammer (1) führenden Lufteintritt (19) oberhalb der Wassereindüsung (12),
**dadurch gekennzeichnet,**
**daß** der zweite Lufteintritt (19) über ein zwei- oder mehrstufig in das Innere der Kühlkammer (1) hineinragendes Rohr (16) erfolgt, dessen Stufen (17a, 17b, 17c), beginnend mit der von der Kühlkammerwand (9) ausgehenden ersten Stufe, jeweils verringerte Strömungsquerschnitte aufweisen, wobei aus den einzelnen Stufen (17a, 17b, 17c) jeweils nur Teilmengen der dem Rohr (16) insgesamt zugeführten Kühlluftmenge austreten.

2. Kühlturm nach Anspruch 1, **dadurch gekennzeichnet, daß** der freie Ausströmungsquerschnitt (18) am Ende jeder Stufe (17a, 17b, 17c) des Rohres (16) gleich ist dem Strömungsquerschnitt dieser Stufe, vermindert um den Strömungsquerschnitt der nächsten Stufe.

3. Kühlturm nach Anspruch 1 oder Anspruch 2, **gekennzeichnet durch** einen vor dem Rohr (16) angeordneten, Luft in das Rohr (16) fördernden Druckventilator (7).

4. Kühlturm nach Anspruch 3, **dadurch gekennzeichnet, daß** der Druckventilator (7) von einem zylindrischen Ventilatorgehäuse (6) umgeben ist, und daß ein erster Teilstrom des das Ventilatorgehäuse (6) verlassenden Kühlluftstroms in die erste Stufe (17a) des Rohres und ein zweiter Teilstrom unmittelbar in die Kühlkammer (1) gelangt.

5. Kühlturm nach einem der vorangehenden Ansprüche, **gekennzeichnet durch** einen Luftwärmetauscher (5) vor dem zweiten Lufteintritt (19).

6. Kühlturm nach einem der vorangehenden Ansprüche, **dadurch gekennzeichnet, daß** die Stufen (17a, 17b, 17c) des Rohres (16) axial relativ zueinander verstellbar sind.

## Claims

1. Cooling tower with a cooling chamber (1) with the cooling air flowing through from bottom to top, a water injection (12) of spray nozzles (13) distributed horizontally in the cooling chamber, as well as a first air inlet (11) below and a second air inlet (19) above said water injection (12) leading from the side into the cooling chamber (1),
**characterized in that**
the second air inlet (19) is effected by a two-or-more-staged pipe (16) projecting into the interior of the cooling chamber (1), the stages (17a, 17b, 17c) of which pipe have each smaller flow cross sections beginning with the first stage going out from the cooling chamber wall (9), whereby only partial quantities of the total cooling air quantity fed into the pipe (16) emerge from the individual stages (17a, 17b, 17c).

2. Cooling tower according to Claim 1, **characterized in that** the free outflow cross section (18) at the end of each stage (17a, 17b, 17c) of the pipe (16) is equal to the flow cross section of this stage, reduced by the flow cross section of the next stage.

3. Cooling tower according to Claim 1 or Claim 2, **characterized by** a pressure ventilator (7) located in front of the pipe (16) and feeding air into the pipe (16).

4. Cooling tower according to Claim 3, **characterized in that** the pressure ventilator (7) is surrounded by a cylindrical ventilator housing (6), and that a first partial stream of the cooling air flow leaving the ventilator housing (6) goes into the first stage (17a) of the pipe and a second partial stream directly into the cooling chamber (1).

5. Cooling tower according to one of the preceding claims, **characterized by** an air heat exchanger (5) in front of the second air inlet (19).

6. Cooling tower according to one of the preceding claims, **characterized in that** the stages (17a, 17b, 17c) of the pipe (16) are adjustable axially relative to each other.

## Revendications

1. Tour de refroidissement avec une chambre de refroidissement (1) traversée de bas en haut par l'air de refroidissement, une injection (12) d'eau à partir de buses de pulvérisation (13) réparties horizontalement dans la chambre de refroidissement, ainsi qu'une première entrée (11) d'air au-dessous et une deuxième entrée (19) d'air au-dessus de l'injection d'eau (12) et qui arrive depuis le côté dans la chambre de refroidissement,
***caractérisée en ce que*** la deuxième entrée d'air (19) s'effectue par une canalisation (16) à deux ou plusieurs gradins et formant saillie à l'intérieur de la chambre de refroidissement (1), canalisation dont les gradins (17a, 17b, 17c) présentent des sections d'écoulement de plus en plus petites en partant du premier gradin partant de la paroi (9) de la chambre de refroidissement, les différents gradins (17a, 17b, 17c) ne laissant sortir à chaque fois qu'une partie de la quantité d'air de refroidissement totale introduite dans la canalisation (16).

2. Tour de refroidissement selon la revendication *1, **caractérisée en ce que*** la section libre de sortie (18) à l'extrémité de chaque gradin (17a, 17b, 17c) de la canalisation (16) est identique à la section d'écoulement de ce gradin réduite de la section d'écoulement du gradin suivant.

3. Tour de refroidissement selon la revendication 1 ou la revendication 2, ***caractérisée par*** un ventilateur pressurisé (7) placé avant la canalisation (16) et envoyant de l'air dans la canalisation (16).

4. Tour de refroidissement selon la revendication 3, ***caractérisée en ce que*** le ventilateur pressurisé (7) est entouré d'une gaine de ventilateur cylindrique (6) et ***en ce qu'**un* premier écoulement partiel du courant d'air de refroidissement quittant la gaine (6) de ventilateur entre dans le premier gradin (17a) de la canalisation et un deuxième écoulement partiel va directement dans la chambre de refroidissement (1).

5. Tour de refroidissement selon l'une quelconque des revendications précédentes, ***caractérisée par*** un échangeur de chaleur à air (5) avant la deuxième entrée (19) d'air.

6. Tour de refroidissement selon l'une quelconque des revendications précédentes, ***caractérisée en ce que*** les gradins (17a, 17b, 17c) de la canalisation (16) sont mobiles axialement les uns par rapport aux autres.
